# EUROPEAN PATENT APPLICATION

(11) **EP 0 866 371 A1**
(43) Date of publication of application: **23.09.1998**
(21) Application number: 98200714.8
(22) Date of filing: 06.03.1998
(51) Int. Cl.: G03D 13/00, G03B 27/30

(54) **A portable photothermographic film processor**

(30) Priority: 20.03.1997 US 822386
(71) Applicant: EASTMAN KODAK COMPANY, Rochester, New York 14650 (US)
(72) Inventor: Baker, Charles W., c/o Eastman Kodak Company, Rochester, New York 14650-2201 (US)
(74) Representative: Lewandowsky, Klaus, Dipl.-Ing.

(57) **Abstract**

A portable, film processing unit for processing a photothermographic film contained in a film cassette, the portable processing unit comprises a movable housing for permitting mobility of the processing unit; a receptacle on said housing for receiving the film cassette; and a thermal processing unit structurally supported by said housing for converting the film into hardcopy form.

## Description

The invention relates generally to the field of loading and processing photothermographic film and, more particularly, to loading and processing such photothermographic film by utilizing a portable processor for providing efficient access to a processor.

Photothermographic film is used in the medical field for capturing an image which is exposed to x-rays as is well known in the art, for example by such well known techniques as localization portal and vertification portal imaging. These captured images are typically processed in a darkroom of the medical facility. These darkrooms usually include a plurality of permanently installed processing devices for permitting processing of the film.

After processing, the exposed film is transported from the darkroom and returned to the appropriate medical personnel for assisting in medical diagnosis.

Although the presently known and utilized system and method of processing photothermographic film are satisfactory, they are not without drawbacks. For instance, installation and maintenance of the permanently installed processing devices are obviously time consuming, labor intensive and expensive. In addition, the film is transported from the x-ray room, to the darkroom and back to medical personnel, which obviously adds further delay to access to the x-ray images.

Consequently, a need exists for improvements in the system and method of processing such film so as to overcome the above-described drawbacks.

The present invention is directed to overcoming one or more of the problems set forth above. Briefly summarized, according to one aspect of the present invention, the invention resides in a mobile, film processing unit for processing film contained in a film cassette, the mobile processing unit comprising: (a) a portable housing for permitting mobility of the processing unit; (b) a receptacle structurally supported by said housing for receiving the film cassette; and (c) a thermal processing unit structurally supported by said housing for processing the film.

It is an object of the present invention to provide a mobile processing unit for loading and unloading film cassettes, and for processing the photothermographic film.

It is an advantage of the present invention to provide a cost efficient system for automatically loading unexposed film into the x-ray film cassette.

It is also an advantage of the present invention to automatically remove the exposed film from the film cassette.

It is a further advantage to automatically process the photothermographic film; and then automatically re-load unexposed film into the x-ray film cassette.

It is a feature of the present invention to provide a light-tight mobile housing for permitting mobility of the processing unit.

These and other aspects, objects, features and advantages of the present invention will be more clearly understood and appreciated from a review of the following detailed description of the preferred embodiments and appended claims, and by reference to the accompanying drawings.
Fig. 1 is a perspective view of a film cassette of the present invention; and
Fig. 2 is schematic diagram of a portable processing unit of the present invention.

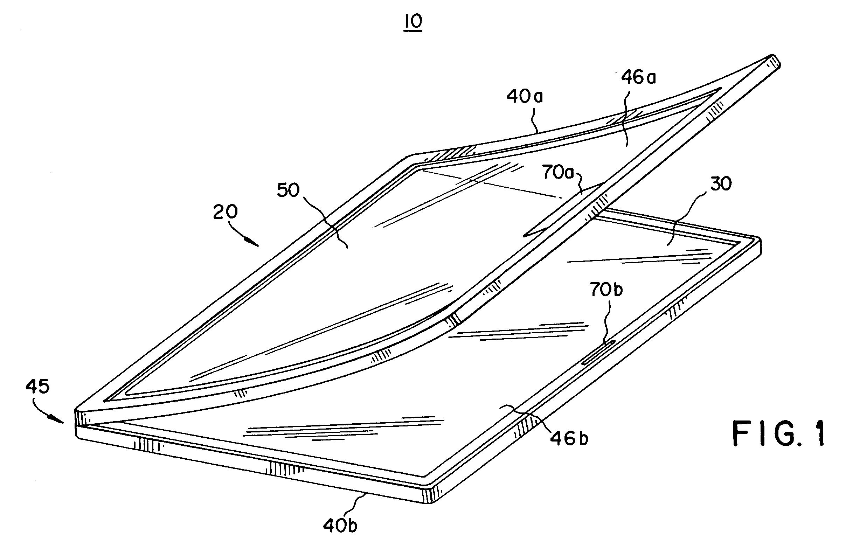

Referring to Fig. 1, there is illustrated a film cassette 10 having a cassette body 20 for providing a protective covering for photothermographic film 30 contained therein. The cassette body 20 includes two hinged covers 40a and 40b that are attached together at one hinged end 45. Two fluorescent intensifying screens 46a and 46b are respectively positioned in both hinged covers 40a and 40b to facilitate film exposure, as is well known in the art. The hinged cover 40a is movable both toward and away from hinged cover 40b for permitting the cassette body 20 to be opened and closed for insertion of the photothermographic film 30. The hinged covers 40 are held together in the closed position by a latch 70a and 70b respectively positioned on each hinged cover 40.

For capturing an image, the cassette body 20 is opened; film 30 is inserted therein; and the cassette body 20 is then closed. The loaded film cassette 10 is then ready to be subjected to x-rays for creating an image by directing x-rays onto and through the subject and finally onto the film cassette 10 by means well known in the art. During exposure to such x-rays, the screens 46a and 46b emit visible light in proportion to the amount of incoming x-ray exposure for exposing the film and for, consequently, capturing the subject as an image thereon. The cassette 10 is then inserted into a mobile processing unit (not shown in Fig. 1).

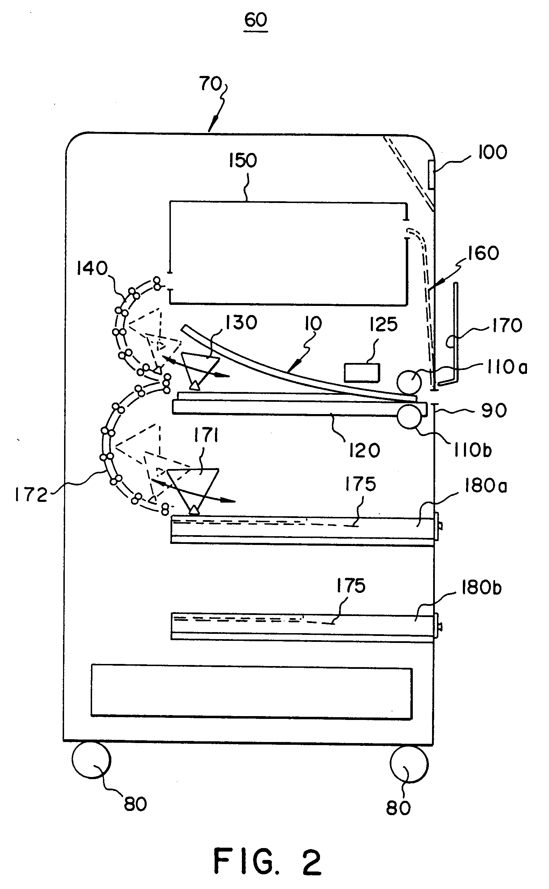

Referring to Fig. 2, there is illustrated a mobile processing unit 60 that includes a light-tight housing 70 for forming a protective covering. Four castors 80 (only two are shown) are positioned at each corner of lower portion of the housing 70 for permitting the mobile processing unit 60 to be easily transported between locations. A hinged cassette access 90 is disposed on a front portion of the housing 70 for permitting the cassette access 90 to be moved to its open position and the film cassette to be inserted therein. A control panel 100 is disposed at the upper portion of the housing 70 for permitting the user to initiate installation of the film cassette and to thereafter initiate processing of the film. It is instructive to note that the control panel is connected to control circuitry or electronics which, is turn, connected to various components of the processor for permitting efficient operation of the processor, as will be apparent to those skilled in the art. The user pushes a control button (not shown) on the control panel 100 for causing a set of cassette transport rollers 110a and 110b to transport the film cassette 10 onto a cassette support assembly 120.

As the film cassette 10 is entering the housing 70 via the rollers 110, a hook device of a latch release mechanism 125 grips the latch mechanism 70a for causing the cover 40a to spring open as the cassette enters the film transport assembly. The hook device is sufficiently flexible so that it releases the latch mechanism 70a after opening the cover 40a. An upper film pick-up assembly 130 lifts the exposed film 30 from the film cassette 10 and onto an upper film transport assembly 140, as shown by the pick-up assemblies 130 illustrated in phantom. The film pickup assembly 130 and film transport assembly 140 are preferably similar, but not limited, to those in the "KODAK" ML-7OO film loader and the "KODAK" 2180 laser printer.

The heat processing unit 150 receives the exposed film 30, as previously described, and converts the film 30 into visually displayable images by any well-known processing means, such as conductive heat, convective heat or radiant heat sources. After completion of the processing, the processing unit 150 ejects the hardcopy images onto a chute 160 and eventually to a film holding bin 170 for delivery to the user. The above-described process may be repeated for processing additional film.

For replenishing the film cassette 10 with additional film, a lower film pick-up assembly 171 and a lower film transport assembly 172 cooperatively lift additional unused film 175 out of a film supply magazine 180a. The lifting process is the same as described above for the upper film pick-up assembly 130 and upper film transport assembly 140. The film 175 is then passed along the lower transport assembly 172 into the open film cassette 130. An alternate film supply magazine 180b is also disposed in the housing 70 for permitting the selection of film of different sizes and types. In this case, both the lower transport assembly 172 and lower film pick-up assembly 171 are lower to a suitable position for retrieving the additional unused film 175 therefrom. This process is repeated for further inserting unused film 175 into the film cassette 130..

After the film is loaded into the cassette 10, the cassette transport rollers 110 are used to move the cassette 10 from the processor 60. As the film cassette 10 is ejected by the cassette transport rollers 100a and 100b, pressure is applied to the top cover 40a of the cassette which causes the cover 40a to close and latch as the cassette 10 is ejected from the cassette access 90. The cassette access 90 is pivoted to its open position as a result of the film cassette exerting an outward force on the cassette access 90. The user then manually removes the film cassette once a portion of it extends out of the housing 70.

### Parts List:

- 10: film cassette
- 20: cassette body
- 30: photothermographic film
- 40a: top hinged cover
- 40b: bottom hinged cover
- 46a: top screen
- 46b: bottom screen
- 60: processing unit
- 70: housing
- 70a: top latch
- 70b: bottom latch
- 80: casters
- 90: cassette access
- 100: control panel
- 110a: top transport rollers
- 110b: bottom transport rollers
- 120: support assembly
- 125: latch release mechanism
- 130: upper pick-up assembly
- 140: upper transport assembly
- 150: heat processing unit
- 160: chute
- 170: holding bin
- 171: lower pick-up assembly
- 172: lower transport assembly
- 175: fresh film
- 180: film supply magazine

## Claims

1. A portable, film processing unit for processing film contained in a film cassette, the portable processing unit comprising:
(a) a movable housing for permitting mobility of the processing unit; and
(b) a thermal processing unit structurally supported by said housing for converting the film into hardcopy form.

2. The portable processing unit as in claim 8 wherein said thermal processing unit is operated by conductive heat.

3. The portable processing unit as in claim 8 wherein said thermal processing unit is operated by convection heat.

4. The portable processing unit as in claim 8 wherein said thermal processing unit is operated by radiant heat.

5. The portable processing unit as in claim 8 further comprising three wheels attached to said housing for permitting mobility of the processing unit.

6. The portable processing unit as in claim 8 further comprising a transport table for receiving the film from the film cassette and directing the film to said thermal processing unit.
